# EUROPÄISCHE PATENTANMELDUNG

(11) **EP 0 855 544 A2**
(43) Veröffentlichungstag der Anmeldung: **29.07.1998**
(21) Anmeldenummer: 97122877.0
(22) Anmeldetag: 24.12.1997
(51) Int. Cl.: F16K 31/60

(54) **Einhebelmischarmatur**

(30) Priorität: 23.01.1997 DE 19702354
(71) Anmelder: Hans Grohe GmbH & Co. KG, 77761 Schiltach (DE)
(72) Erfinder: Ginter, Gerhard, 78144 Tennenbronn (DE); Orlandi, Alessio, 46043 Castiglione delle Stiviere (IT)
(74) Vertreter: Patentanwälte Ruff, Beier, Schöndorf und Mütschele

(57) **Zusammenfassung**

Eine Kartusche für eine Mischarmatur zur Bedienung mit einem einzigen Hebel enthält in einem Kartuschengehäuse eine feststehende Steuerscheibe und eine bewegbare Steuerscheibe. Zur Verschiebung der bewegbaren Steuerscheibe greift ein Ende des Steuerhebels in eine Vertiefung eines mit der bewegbaren Steuerscheibe verbundenen Adapterelements ein. Der Teil des Hebels, der in das Adapterelement eingreift, ist mit einem metallischen Überzug versehen, der in Verschieberichtung die Form eines Zahnkranzes aufweist. Er greift in eine Zahnstange des Adapterelements ein. Durch den Überzug aus Metall ist die Kartusche weniger anfällig gegen Verschleiß.

## Beschreibung

Die Erfindung geht aus von einer Mischarmatur, bei der die Menge des ausströmenden Wassers und seine Temperatur mit Hilfe eines einzigen Hebels eingestellt werden kann.

Eine derartige Mischarmatur ist bereits bekannt (US-PS 5402827). Bei dieser Armatur greift der Hebel mit seinem einen Ende in eine Ausnehmung eines mit der bewegbaren Steuerscheibe verbundenen Adapterelements ein. Dieses Ende des Hebels führt dabei eine Bewegung längs eines Kreisbogens aus, während die Steuerscheibe in einer Ebene verschoben wird. Daher ist das Ende des Hebels gekrümmt ausgebildet, so daß dieses nur linienförmig in einer Vertiefung des Adapterelements anliegt. Diese linienförmige Anlage führt zu einer starken Belastung und damit zu einem hohen Verschleiß des Hebels, was dann zu einer ungenauen Verstellung des Mischventils führt.

Bei einem weiteren bekannten Mischventil (IT-PS 1110824) ist das der Steuerscheibe zugeordnete Ende des Hebels mit einer Verzahnung versehen, die in einer Zahnstange des Adapterelements eingreift. Hierdurch läßt sich zwar die Fläche, an der die beiden Elemente miteinander in Eingriff stehen, vergrößern, dennoch ist auch hier eine deutliche Abnutzung gegeben.

Der Erfindung liegt die Aufgabe zugrunde, eine Einhebelmischarmatur der eingangs genannten Art zu schaffen, die bei einfachem Aufbau eine lange Lebensdauer ohne Verschlechterung ihrer Einstellmöglichkeiten aufweist.

Zur Lösung dieser Aufgabe schlägt die Erfindung eine Mischarmatur mit den im Anspruch 1 genannten Merkmalen vor. Weiterbildungen der Erfindung sind Gegenstand von Unteransprüchen.

Erfindungsgemäß wird also diejenige Fläche, an der ein Eingriff zwischen dem Hebel und dem Gegenelement auftritt, mindestens an einer Seite durch eine Verbesserung der Oberfläche im Hinblick auf eine Verschleißarmut oder einen Widerstand gegenüber einem Verschleiß verbessert.

Diese Oberflächenverbesserung kann beispielsweise durch eine Härtung der Oberfläche, insbesondere aber durch eine Beschichtung der Oberfläche verwirklicht werden.

Ebenfalls vorgesehen sein kann, das verschleißarme Material der Oberfläche dadurch zu bilden, daß der Hebel und/oder das Gegenelement einen Überzug aus einem verschleißarmen Material erhält. Dieser Überzug kann als aufzubringende Folie oder auch als formstabiles Einsatzteil ausgebildet sein. Insbesondere kann der Überzug als Aufsetzteil ausgebildet sein, das auf den Hebel oder das Gegenelement nachträglich aufgesetzt wird.

In Weiterbildung der Erfindung kann vorgesehen sein, daß der Eingriffsteil an mehreren Stellen mit dem Gegenelement in Eingriff steht, um auch auf diese Weise eine Verbesserung des Abnutzverhaltens zu bewirken.

Es kann ebenfalls in Weiterbildung vorgesehen sein, daß der Eingriffsteil einen Zahnkranz mit mehreren Zähnen und das Gegenelement eine Zahnstange aufweist. Hierbei kann die Ausbildung so geschehen, daS ein Eingriff mindestens dreier Zähne gleichzeitig vorhanden ist.

Insbesondere schlägt die Erfindung vor, daß es sich bei der Verzahnung um eine Evolventenverzahnung handelt, bei der also ein Abrollen der Flanken der Zähne aneinander erfolgt.

Insbesondere sinnvoll ist die Erfindung bei einer Mischarmatur, bei der die Steuerscheiben und das Betätigungselement in einer Kartusche als Baueinheit zusammengefaßt sind.

Weitere Merkmale, Einzelheiten und Vorzüge der Erfindung ergeben sich aus den Patentansprüchen, deren Wortlaut zum Inhalt der Beschreibung gemacht wird, der folgenden Beschreibung einer bevorzugten Ausführungsform der Erfindung sowie anhand der Zeichnung. Dabei zeigen:
- Fig. 1: einen Längsschnitt durch eine Mischerkartusche nach der Erfindung;
- Fig. 2: einen Längsschnitt in einer gegenüber der Fig. 1 um 90° verdrehten Ebene.

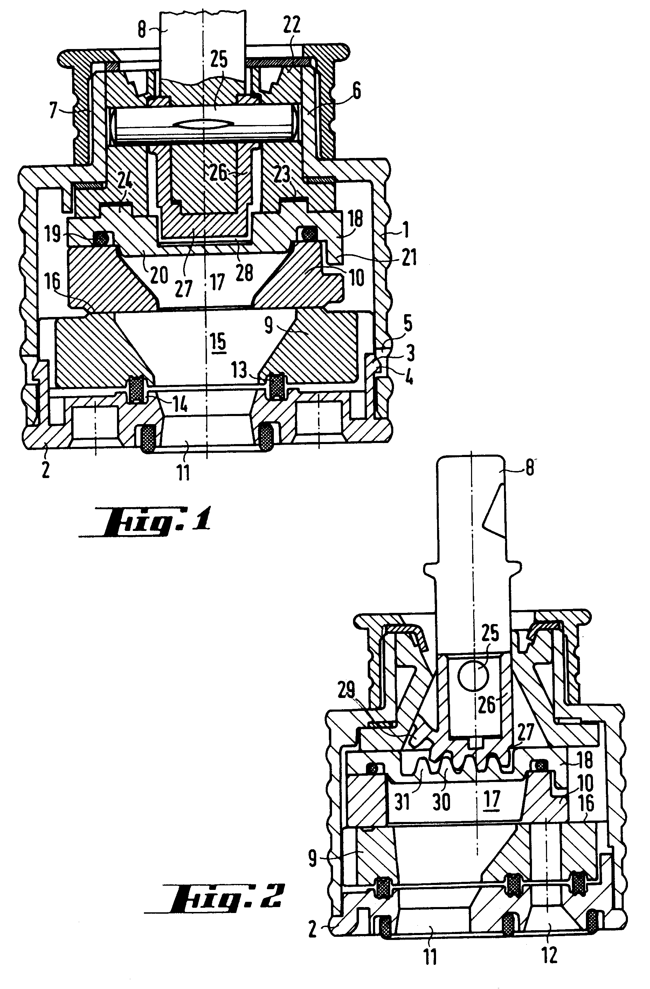

Die in Fig. 1 im Schnitt dargestellte Kartusche enthält ein Gehäuse 1, das im wesentlichen zylindrisch ausgebildet ist. An seiner in Fig. 1 unteren Seite ist das Gehäuse 1 offen und wird durch einen Boden 2 abgeschlossen. Der Boden 2 enthält mehrere federnde Zungen 3, die koaxial zu dem Mantel des Gehäuses 1 innerhalb des Gehäuses angeordnet sind und mit Nasen 4 in Öffnungen 5 des Mantesl des Gehäuses 1 eingreifen. Auf diese Weise wird der Boden 2 verrastend an dem Gehäuse 1 festgelegt.

Auf der gegenüberliegenden Seite enthält das Gehäuse 1 koaxial einen Halsabschnitt 6 verringerten Durchmessers. Dieser Halsabschnitt 6 ist zum in Fig. 1 oberen Ende hin offen. Er weist an seiner Außenseite ein Außengewinde 7 auf. Das Gehäuseende, an dem der Boden 2 angebracht ist, ist zum Einsetzen in eine Mischarmatur bestimmt. Das obere Ende ragt dann zu der Außenseite der Mischarmatur, so daß ein Benutzer an dem Betätigungselement 8 angreifen kann, das abgebrochen dargestellt ist.

In dem Gehäuse 1 ist ein Mischsystem angeordnet, das aus einer feststehenden Steuerscheibe 9, einer bewegbaren Steuerscheibe 10 und dem Betätigungselement 8 aufgebaut ist.

Durch den Boden 2 führen mehrere Öffnungen 11, von denen die Fig. 1 nur eine Öffnung zeigt, während in Fig. 2 auch eine zweite Öffnung 12 zu sehen ist.

Auf der Innenseite des Bodens 2 ist, unter Zwischenlage einer Dichtung 13, die feststehende Steuerscheibe 9 aufgesetzt. Die Dichtung 13 greift beidseits in Nuten 14 ein und umgibt die mehreren Öffnungen 11, 12 in dem Boden, die mit entsprechenden Durchgangsöffnungen 15 in der Steuerscheibe 9 korrespondierenden.

Auf der feststehenden Steuerscheibe 9, die oben in Fig. 1 eine ebene Stirnfläche 16 bildet, liegt die zweite Steuerscheibe 10. Diese bewegbare Steuerscheibe 10 kann gegenüber der Steuerfläche 16 der feststehenden Steuerscheibe 9 beliebig bewegt werden. Sie enthält eine einzige Ausnehmung 17, die durch die Steuerscheibe 10 durchgeht. Auf der dem Boden 2 abgewandten Oberseite der Steuerscheibe 10 liegt auf dieser ein Adapterelement 18 auf, das längs des Umfangs der oberen Öffnung der Ausnehmung 17 gegenüber der Steuerscheibe 10 durch eine Dichtung 19 abgedichtet ist. Das Adapterelement 18 ist durch sein in die Ausnehmung 17 eingreifendes Mittelteil 20 und einen äußeren Ansatz 21 in Dreh- und Verschieberichtung mit der Steuerscheibe 10 verbunden. Die Steuerscheibe 10 folgt also jeder Bewegung des Adapterelements 20.

In dem Halsansatz 6 des Gehäuses 1 ist ein Kernelement 22 angeordnet, das auf der Oberseite des Adapterelements 18 aufliegt. Die Unterseite des Kerns 22 enthält zwei parallele Nuten 23, in die je eine Rippe 24 auf der Oberseite des Adapterelements 18 eingreift. Die Breite der Rippen 24 ist der Breite der Nuten 23 gleich. Dies bedeutet, daß ein Verdrehen des Kerns 22 zu einer Verdrehung des Adapterelements führt, während eine Verschiebung des Adapterelements in Längsrichtung der Nuten 23 noch möglich ist.

In dem Kern 22 ist mit Hilfe einer eine Achse bildenden Welle 25 das Betätigungselement 8 gelagert. Das Betätigungselement bildet also einen zweiarmigen Hebel, der um die Achse der Welle 25 verschwenkbar ist.

Der unterhalb der Welle 25 vorhandene Teil des Betätigungselements weist einen Überzug 26 beispielsweise aus Metall auf, während der übrige Teil des Betätigungselement 8 aus Kunststoff besteht. Der Überzug ist so ausgebildet, daß der Innenquerschnitt U-förmig ist und mit seinen Schenkeln noch an der Welle 25 gelagert ist.

Der die freie Stirnseite des unteren Teiles des Hebels abdeckende Teil 27 des Überzugs 26 greift in eine Nut 28 in der Oberseite des Adapterelements 18 ein.

Dieser Eingriffsteil 27 geht aus dem Schnitt der Fig. 2 in seiner seitlichen Form besser hervor. Es ist hier zu sehen, daß der Eingriffsteil 27 die Form eines Zahnkranzes 29 aufweist. In der auch als Kanal zu bezeichnenden Nut 28 ist eine Zahnstange 30 mit insgesamt vier Zähnen 31 ausgebildet. Die Zahnflanken beider Verzahnungen sind als Evolventenverzahnung ausgebildet, so daß bei einer Verschwenkung des Hebels 8 um die Welle 25 ein Abrollen der Zahnflanken aufeinander erfolgt. Die Verschwenkung des Hebels 8 um die Welle 25 führt zu einer linearen Verschiebung des Adapterelements 18 und der damit verbundenen bewegbaren Steuerscheibe 10 auf der Steuerfläche 16 der feststehenden Steuerscheibe 9.

Das kalte oder warme Wasser fließt durch eine der beiden Eintrittsöffnungen 11 des Bodens 2 und durch die Ausnehmung 17, bei entsprechender Stellung der Steuerscheiben 10, in die Auslaßöffnung 12.

Der Überzug 26 ist aus einem Material, beispielsweise Metall, das weniger anfällig gegenüber einem Verschleiß ist als das Kunststoffmaterial des Hebels 8.

Anstelle des verschleißarmen Überzugs 26 am Hebel 8 könnte auch die Zahnstange 30 einen solchen verschleißarmen Überzug aufweisen.

## Patentansprüche

1. Einhebelmischarmatur, mit
1.1 einer feststehenden Steuerscheibe (9), die
1.1.1 eine Steuerfläche (16) und
1.1.2 Durchgangsöffnungen (11, 12) für kaltes und warmes Wasser aufweist,
1.2 einer bewegbaren Steuerscheibe (10), die
1.2.1 mit ihrer der feststehenden Steuerscheibe (9) zugewandten Steuerfläche an deren Steuerfläche (16) anliegt,
1.3 einem Betätigungselement (8) zur Bewegung der bewegbaren Steuerscheibe (10) in mindestens einem Freiheitsgrad, das
1.3.1 in Eingriff mit der bewegbaren Steuerscheibe (10) oder mit einem mit diesem verbundenen Adapterelement (18) steht, wobei
1.4 der Eingriffsteil (27) des Betätigungselements (8) und/oder der Teil, in den dieser eingreift, mindestens an der Oberfläche aus einem verschleißarmen Material besteht.

2. Mischarmatur nach Anspruch 1, bei der das verschleißarme Material als Beschichtung ausgebildet ist.

3. Mischarmatur nach Anspruch 1, bei der das verschleißarme Material als Überzug (26) ausgebildet ist.

4. Mischarmatur nach einem der vorhergehenden Ansprüche, bei der das verschleißarme Material als Aufsetzteil ausgebildet ist.

5. Mischarmatur nach einem der vorhergehenden Ansprüche, bei der der Eingriffsteil (27) an mehreren Stellen mit dem Gegenelement in Eingriff steht.

6. Mischarmatur nach einem der vorhergehenden Ansprüche, bei der der Eingriffsteil (27) einen Zahnkranz und das Gegenelement eine Zahnstange (30) aufweist.

7. Mischarmatur nach Anspruch 6, bei der der Zahnkranz und die Zahnstange eine Evolventenverzahnung aufweisen.

8. Mischarmatur nach einem der vorhergehenden Ansprüche, bei der die Elemente der Mischung in einer Kartusche untergebracht sind.

9. Mischarmatur nach einem der vorhergehenden Ansprüche, bei der das Betätigungselement ein um eine feste Achse verschwenkbarer Schwenkhebel ist.
